# EUROPÄISCHE PATENTANMELDUNG

(11) **EP 3 026 071 A1**
(43) Veröffentlichungstag der Anmeldung: **01.06.2016**
(21) Anmeldenummer: 14195000.6
(22) Anmeldetag: 26.11.2014
(51) Int. Cl.: C08G 18/48, C08G 18/66, C08G 18/72, C08G 18/73, C08G 18/75, C08G 18/08, C09D 175/04, C08G 18/38, C08G 18/40, C08G 18/42, C09J 175/04

(54) **Stabilisierte Polyurethan-Dispersionen**

(71) Anmelder: Henkel AG & Co. KGaA, 40589 Düsseldorf (DE); Max-Planck-Gesellschaft zur Förderung der Wissenschaften e.V., 80539 München (DE)
(72) Erfinder: Taden, Andreas, 40597 Düsseldorf (DE); Landfester, Katharina, 55122 Mainz (DE); Keller, Hannes, 40227 Düsseldorf (DE); Roh, Se-Hee, Shanghai (CN)

(57) **Zusammenfassung**

Die vorliegende Erfindung betrifft wässrige Polyurethan-Dispersionen, die mittels eines Verfahrens herstellbar sind, das umfasst: (i) Herstellung eines PU-Präpolymers aus einer Polyolmischung und mindestens einem organischen Polyisocyanat, wobei die Polyolmischung (a) 40-95 Gew.-% mindestens eines Polyesterpolyols, das einen Schmelzpunkt Tₘ von größer 0°C besitzt; (b) 0.1-5 Gew.-% mindestens eines Polyols das mindestens eine ionische oder potentiell ionische hydrophile Gruppe aufweist; und (c) 0.5-10 Gew.-% mindestens eines nichtionischen Polyetherpolyols, wobei das Polyetherpolyol ein Polyalkylenglykol Homo- oder Copolymer ist, das einen Gehalt von Ethylenoxid Einheiten von unter 50 mol-% aufweist; wobei das Polyurethan-Präpolymer weniger als 5 Gew.-% Ethylenoxid-Einheiten enthält; und (ii) Dispergieren des Polyurethan-Präpolymers in eine kontinuierliche wässrige Phase derart, dass eine stabile Emulsion des Polyurethan-Präpolymers gebildet wird und (iii) Kettenverlängerung des Präpolymers mittels eines Ketterverlängerers. Die so erhältlichen Polyurethan-Dispersionen haben vielfältige Anwendungsbereiche, wie zum Beispiel Klebstoffe, Dichtstoffe und Beschichtungsmittel, aber auch Waschmittel und Kosmetika.

## Beschreibung

Die vorliegende Erfindung betrifft wasser-basierte Polyurethan-Dispersionen, in denen das Polyurethan durch eine Kombination von ionischen und nicht-ionischen Gruppen, die während der Polymerisation direkt in das Polyurethan eingebaut werden, stabilisiert ist. Die Dispersionen werden durch Homogenisierung des entsprechenden Polyurethan-Präpolymers mittels eines Hochscherprozesses in Wasser, um eine Emulsion herzustellen, und anschließende Kettenverlängerung des Präpolymers hergestellt. Die so erhältlichen Polyurethan-Dispersionen haben vielfältige Anwendungsbereiche, wie zum Beispiel Klebstoffe und Beschichtungsmittel, aber auch Waschmittel und Kosmetika.

Polyurethan-Dispersionen werden in großem Maßstab für Industrieklebstoffe eingesetzt und beispielsweise in der Schuh- und Möbelindustrie verwendet. Das wichtigste Verfahren zur Herstellung von Polyurethan-Dispersionen ist dabei das Aceton-Verfahren.

Allerdings gewinnen wässrige Polyurethan-Dispersionen in technischer und ökologischer Hinsicht mehr und mehr an Bedeutung, da sie toxikologisch und ökologisch unbedenklicher sind als Polyurethane in organischen Lösungsmitteln.

Prinzipiell können die meisten Polyurethane mit Hilfe von Emulgatoren und extremen Scherkräften in wässrige Emulsionen und Dispersionen überführt werden. Die Stabilität derartiger Emulsionen und Dispersionen ist allerdings unzureichend. Aus diesem Grund gehen Bestrebungen dahin, selbst-emulgierende Polyurethane zu entwickeln, die in Wasser ohne externe Emulgatoren spontan stabile Dispersionen bilden. Dazu werden bei der Polymerisation der Polyurethane bereits stabilisierende ionische oder nichtionische Moleküle eingesetzt, die in die Polymerkette eingebaut werden und später dazu dienen die Polyurethanpartikel in wässriger Umgebung zu stabilisieren.

Abgesehen von Problemen aufgrund unerwünschter Hydrolyse, unzureichender Hydrophobizität und verringerter Stabilität bei hohen Feststoffgehalten, ist es nach wie vor schwierig zur Kristallisation neigende oder dazu fähige Polyurethane stabil als Partikel in einer wässrigen Phase zu dispergieren. Besonders mit Polyurethanen auf Basis von Polyesterpolyolen wird nur sehr schwer eine gute Langzeitstabilität erreicht. Die Partikel weisen dabei üblicherweise eine sehr breite Partikelgrößenverteilung auf und die dispergierten Polyurethane haben keine besonders hohen Molekulargewichte.

Eine derartige Kristallisation von Polyurethanen ist aber eine wichtige thermo-mechanische Eigenschaften, die in bestimmten Anwendungsgebieten erwünscht ist, da über die Kontrolle der Temperatur schnell und reversibel physikalische Wechselwirkungen zwischen den Polymerketten kontrolliert werden können. Der starke Anstieg der Viskosität der mit der physikalischen Quervernetzung einhergeht ist insbesondere für Klebstoffe von Bedeutung.

Es besteht daher Bedarf nach Systemen, die zur Kristallisation neigende Polyurethanpartikel stabil in einer wässrigen Phase dispergieren können und dabei trotz deren hydrophober Natur Partikel mit deutlich engerer Größenverteilung und höheren Molekulargewichten bereitstellen. Dementsprechend liegt das der vorliegenden Erfindung zugrunde liegende Problem in der Bereitstellung von Verfahren, die die stabile Dispergierung auch stark hydrophober Polyurethanpartikel mit vergleichsweise hohen Molekulargewichten in einer kontinuierlichen Wasserphase ermöglichen.

Die vorliegende Erfindung basiert dabei auf der Erkenntnis der Erfinder, dass sich derartige Dispersionen durch eine spezielle Auswahl der zur Herstellung der Polyurethane verwendeten Polyole in Kombination mit bestimmten Homogenisierungsverfahren realisieren lassen.

In einem ersten Aspekt richtet sich die vorliegende Erfindung daher auf ein Verfahren zur Herstellung einer wässrigen Polyurethan-Präpolymer-Dispersion, dadurch gekennzeichnet, dass das Verfahren umfasst:
(i) Umsetzen einer Mischung, die eine Polyolmischung und mindestens ein organisches Polyisocyanat umfasst, um ein Polyurethan-Präpolymer herzustellen, wobei die Polyolmischung umfasst:
   (a) 40-95 Gew.-%, vorzugsweise 50-90 Gew.-%, noch bevorzugter 60-80 Gew.-% mindestens eines Polyesterpolyols, das einen Schmelzpunkt Tₘ von größer 0°C besitzt;
   (b) 0,1-5 Gew.-%, insbesondere 0,5-4 Gew.-%, mindestens eines Polyols, vorzugsweise eines Polyetherpolyols, das mindestens eine ionische oder potentiell ionische hydrophile Gruppe aufweist; und
   (c) 0,5-10 Gew.-%, insbesondere 3-5 Gew.-%, mindestens eines nichtionischen Polyetherpolyols, wobei das Polyetherpolyol ein Polyalkylenglykol Homo- oder Copolymer ist, das einen Gehalt von Ethylenoxid Einheiten von unter 50 mol-% aufweist;
      wobei das Polyurethan-Präpolymer weniger als 5 Gew.-% Ethylenoxid-Einheiten enthält; und
(ii) Dispergieren des Polyurethan-Präpolymers in eine kontinuierliche wässrige Phase derart, dass eine stabile Emulsion gebildet wird.

In verschiedenen Ausführungsformen wird in einem nächsten Schritt das Polyurethan-Präpolymer mit einem geeigneten Kettenverlängerer umgesetzt, um eine wässrige Polyurethan-Dispersion zu bilden. In einem weiteren Aspekt betrifft die Erfindung daher Verfahren zur Herstellung einer wässrigen Polyurethan-Dispersion (PUD), dadurch gekennzeichnet, dass das Polyurethan-Präpolymer in der wässrigen Polyurethan-Präpolymer-Dispersion mit einem geeigneten Kettenverlängerer umgesetzt wird, um eine wässrige Polyurethan-Dispersion zu bilden.

In weiteren Aspekten richtet sich die Erfindung auf die derart erhältlichen Polyurethan-Präpolymer-Dispersionen und Polyurethan-Dispersionen.

Noch weitere Aspekte der Erfindung betreffen Zusammensetzungen, die die hierin beschriebenen Polyurethan-Dispersionen enthalten, insbesondere Klebstoffzusammensetzungen oder Beschichtungsmittelzusammensetzungen.

Schließlich richtet sich die Erfindung auch auf die Verwendung einer Polyurethan-Dispersion, wie sie mittels der hierin beschriebenen Verfahren erhältlich ist, als Klebstoff, Beschichtungsmittel oder Rheologie-Modifikator.

Die vorliegende Erfindung richtet sich auf ein Verfahren zur Herstellung stabiler Polyurethan-Dispersionen, wobei das Verfahren bestimmte Mengen an ionischen und nichtionischen Gruppen verwendet, die während der Polymerisation in die Polyurethan-Präpolymere eingebaut werden und diesen die gewünschte verbesserte Stabilität verleihen. Überraschenderweise haben die Erfinder gefunden, dass die Verwendung von nur geringen Mengen an nichtionischem Polyethylenglykol und stattdessen die Verwendung hydrophoberer Polyalkylenglykole, wie insbesondere Polypropylenglykol, zu einer schmaleren Partikelgrößenverteilung der dispergierten Partikel führt. Des Weiteren sind derartige Polypropylenglykol-Einheiten besser als die entsprechenden Polyethylenglykole dazu geeignet, Polyurethanpolymere, die zur Kristallbildung neigende Gruppen oder Einheiten enthalten, in wässrigen Dispersionen zu stabilisieren. Zur Stabilisierung derartiger Polyurethane, die Polyoleinheiten mit hohen Schmelzpunkten enthalten, ist es ferner vorteilhaft, die Menge an ionischen Gruppen zu minimieren. Es wird unter anderem vermutet, dass ein hoher Anteil an ionischen Gruppen oder Polyethylenglykoleinheiten zur Folge hat, dass es innerhalb der Polymerpartikel zu einer Phasentrennung zwischen einer Phase, die reich an den hydrophileren Anteilen ist, wie den ionischen Gruppen und den hydrophilen Polyethereinheiten, und einer Phase, die reich an den zur Kristallisation neigenden hydrophoberen Polyesteranteilen ist, kommt, die aber unerwünscht ist, da sie die Kristallisationskinetiken und damit die Partikelstabilität negativ beeinflusst. Das lässt sich dadurch erklären, dass durch eine derartige Phasentrennung die lokale Konzentration an nicht kristallisierbaren Polymersegmenten sinkt. Das führt dann wiederum dazu, dass die Hemmung der Kristallisation durch diese nicht kristallisierbaren Polymersegmente, die mit Nukleation und Kristallitwachstum interferieren, verringert wird, d.h. die Wahrscheinlichkeit der Bildung von Kristalliten in den Polymerpartikeln steigt. Es wird vermutet, dass dieses Verhalten auch die Erklärung für die höhere Stabilität von homogenen Partikeln ist, da die Bildung von Kristalliten die kolloidale Stabilität dadurch beeinflusst, als dass an der Oberfläche des Partikels an der entsprechenden Stelle die isotrope Stabilisierung durch den gebildeten Kristalliten unterbrochen wird.

Die Verringerung des Anteils an hydrophilen und insbesondere ionischen Gruppen ist ferner auch deswegen vorteilhaft, weil es die Neigung von Klebstoffen und Beschichtungen, die aus den Polyurethan-Dispersionen hergestellt werden, Wasser aufzunehmen verringert und so einer Verschlechterung der mechanischen Eigenschaften entgegenwirkt.

Die hierin beschriebenen Polyurethan-Präpolymere zeichnen sich daher dadurch aus, dass sie ionische und bestimmte nichtionische, nicht kristallisierbare Polymersegmente enthalten, die für eine stabile Dispersion in wässrigen Phasen ausreichend sind, aber gleichzeitig die Kristallisation dadurch inhibieren, dass die verwendeten nichtionischen, nicht kristallisierbaren Polymersegmente mit den zur Kristallisation neigenden Polyestersegmenten derart kompatibel sind, dass ein homogenes Partikel gebildet werden kann.

In verschiedenen Ausführungsformen der hierin beschriebenen Verfahren werden die Polyurethan-Präpolymere aus einer Mischung von Polyolen, die die gewünschten Eigenschaften aufweisen, und geeigneten Polyisocyanaten, insbesondere Diisocyanaten, die die Polyole miteinander verknüpfen synthetisiert. Es ist für den Fachmann selbstverständlich, dass dieser Ansatz auch umgekehrt durchgeführt werden kann, d.h. eine Mischung von Polyisocyanaten mit den gewünschten Eigenschaften mit entsprechenden Polyolen/Diolen als Verknüpfungsreagenz umgesetzt werden kann. Im Folgenden wird bei der genaueren Beschreibung der Erfindung auf ersteren Ansatz Bezug genommen, wobei dem Fachmann allerdings klar ist, dass die folgende Beschreibung mit entsprechenden Modifikationen auch auf ein Verfahren, das eine Mischung von Polyisocyanaten als Ausgangsmaterial verwendet, anwendbar ist.

Die Polymersegmente der Polyurethane, die zur Kristallisation neigen und erfindungsgemäß eingesetzt werden sind vorzugsweise Polyesterpolyole. Dabei werden insbesondere solche Polyesterpolyole bevorzugt, deren Schmelzpunkt Tₘ größer als 0°C, vorzugsweise größer als 40°C ist. In weiteren Ausführungsformen ist der Schmelzpunkt Tₘ <100°C, vorzugsweise <80°C. Die Angabe des Schmelzpunktes bezieht sich dabei auf den Schmelzpunkt entsprechender hochmolekularer, linearer Polyester Homopolymere. Verfahren die zur Bestimmung der Schmelzpunkte geeignet sind, sind im Stand der Technik bekannt. Insbesondere geeignet ist die Ermittlung durch Differenzialkalorimetrie (DSC = Differential Scanning Calorimetry) entsprechend ISO11357.

Die verwendeten Polyester sind vorzugsweise Polyole, d.h. weisen freie Hydroxylgruppen auf. Insbesondere handelt es sich um Polyesterdiole, d.h. (vorzugsweise lineare) Polyester die zwei endständige Hydroxylgruppen aufweisen.

Geeignete Polyester lassen sich mittels bekannter Verfahren, beispielsweise Kondensationsreaktionen, aus Polyolen und Polysäuren, insbesondere aus Diolen und Disäuren, herstellen. Als Diole werden insbesondere aliphatische Alkandiole, wie Ethandiol, 1,2-Propandiol, 1,3-Propandiol, 1,4-Butandiol, Neopentylglycol, 1,6-Hexandiol, und Mischungen davon eingesetzt. Prinzipiell ist auch der Einsatz zyklischer Diole oder aromatischer Diole denkbar, bevorzugt wird allerdings die Verwendung linearer aliphatischer Diole, wie der vorstehend genannten, insbesondere von 1,2-Propandiol, 1,3-Propandiol, 1,4-Butandiol und 1,6-Hexandiol, ganz besonders bevorzugt von 1,4-Butandiol. Als Disäuren werden vor allem Dicarbonsäuren eingesetzt und hier vorzugsweise lineare aliphatische Dicarbonsäuren. Beispiele für geeignete Säuren schließen ein, sind aber nicht beschränkt auf Oxalsäure, Malonsäure, Bernsteinsäure, Glutarsäure, Adipinsäure, Pimelinsäure, Suberinsäure und Mischungen davon. Auch hier ist es prinzipiell möglich zyklische oder aromatische Dicarbonsäuren, wie beispielsweise Phthalsäure, Terephthalsäure oder Isophthalsäure einzusetzen, die resultierenden Polyester haben allerdings im Vergleich zu solchen die mit aliphatischen Dicarbonsäuren hergestellt sind deutlich erhöhte Schmelz- und Glasübergangstemperaturen. Ein besonders bevorzugt eingesetzter Polyester ist Poly(tetramethylen adipat) (PTMA), welches durch eine Kondensationsreaktion aus 1,4-Butandiol und Adipinsäure darstellbar ist.

Alternativ können geeignete Polyester auch aus zyklischen Estern, insbesondere Lactonen, oder Hydroxycarbonsäuren synthetisiert werden. Ein besonders bevorzugt eingesetzter Ester ist hierbei ε-Caprolacton, das Lacton der ω-Hydroxycapronsäure, wobei der Polyester daraus durch ringöffnende Polymerisation darstellbar ist.

Die zur Bildung der Polyurethan-Präpolymere eingesetzten Polyesterpolyole haben üblicherweise ein mittleres Molekulargewicht Mₙ von 500 bis 5000, vorzugsweise 1000-4000 und besonders bevorzugt 2000 bis 3500 g/mol

Die Polyesterpolyole werden in den Polyolmischungen in Mengen von 40 bis 95 Gew.-%, vorzugsweise 50-90 Gew.-%, insbesondere 60-80 Gew.-% jeweils bezogen auf die Polyolmischung eingesetzt. Bei Mengen größer 95 Gew.-%, gegebenenfalls auch schon größer 90 oder sogar größer 80 Gew.-%, kann der Gesamtgehalt an hydrophilen Gruppen zu gering sein, was sich nachteilig auf die Stabilität auswirken kann. Bei Mengen unter 40 Gew.-% haben die Partikel nicht mehr die gewünschten physikalischen Eigenschaften.

Sofern in der vorliegenden Anmeldung auf Molekulargewichte Bezug genommen wird, beziehen sich die Angaben, sofern nicht anders angegeben, auf das Zahlenmittel des Molekulargewichts (Mₙ). Das Molekulargewicht Mₙ kann auf Basis einer Endgruppenanalyse (Hydroxylzahl gemäß DIN 53240-1:2013-06 / Isocyanatgehalt nach Spiegelberger gemäß EN ISO 11909:2007-05), oder durch Gelpermeationschromatographie (GPC) gemäß DIN 55672-1:2007-08 mit THF als Eluent bestimmt werden. Falls nicht anders angegeben, wurden die angegebenen Zahlenmittel des Molekulargewichts mittels Endgruppenanalyse ermittelt. Darüber hinaus kann das Gewichtsmittel des Molekulargewichts M_{w} mittels GPC, wie oben bereits für Mₙ angegeben, bestimmt werden.

"Mindestens ein", wie hierin verwendet, bedeutet 1 oder mehr, d.h. 1, 2, 3, 4, 5, 6, 7, 8, 9 oder mehr. Bezogen auf einen Inhaltsstoff bezieht sich die Angabe auf die Art des Inhaltsstoffs und nicht auf die absolute Zahl der Moleküle. "Mindestens ein Polyesterpolyol" bedeutet somit mindestens eine Art von Polyesterpolyol, d.h. dass eine Art von Polyesterpolyol oder eine Mischung mehrerer verschiedener Polyesterpolyole verwendet werden kann. Zusammen mit Gewichtsangaben bezieht sich die Angabe auf alle Verbindungen der angegebenen Art, die in der Zusammensetzung/Mischung enthalten sind, d.h. dass die Zusammensetzung über die angegebene Menge der entsprechenden Verbindungen hinaus keine weiteren Verbindungen dieser Art enthält.

Alle Prozentangaben, die im Zusammenhang mit den hierin beschriebenen Zusammensetzungen gemacht werden, beziehen sich, sofern nicht explizit anders angegeben auf Gew.-%, jeweils bezogen auf die betreffende Mischung.

Die hierin verwendeten Polyole, die mindestens eine ionische oder potentiell ionische hydrophile Gruppe aufweisen sind vorzugsweise Verbindungen mit anionischen oder potentiell anionischen Gruppen. Beispiele für solche Verbindungen sind Polyetherpolyole, die mindestens eine, vorzugsweise pro Molekül genau eine, anionische oder potentiell anionische hydrophile Gruppe aufweisen.

Generell sind als ionische Gruppen geeignet, ohne darauf beschränkt zu sein, Sulfat-, Sulfonat-, Phosphat-, Phosphonat-, Carboxylat-, und Ammonium-Gruppen, sowie ionische Heterozyklen, insbesondere stickstoffhaltige, 5-6-gliedrige Heterozyklen. Potentiell ionische Gruppe schließen ein, sind aber nicht beschränkt auf solche, die ausgewählt werden aus der Gruppe bestehend aus Carbonsäure- und Amino-Gruppen sowie ungeladenen Heterozyklen, insbesondere stickstoffhaltigen, 5-6-gliedrigen Heterozyklen. "Potentiell ionisch" bezieht sich hierin auf die Eigenschaft in einer wässrigen Umgebung bei entsprechendem pH-Wert als ionische Verbindung vorzuliegen. Polyole, die derartige ionische oder potentiell ionische Gruppen enthalten werden beispielsweise in US 3,756,992, US 3,479,310 und US 4,108,814 beschrieben.

Ganz besonders bevorzugt sind Sulfonatgruppen. Sulfonatgruppen aufweisende Diole werden beispielsweise in DE 2446440 und DE 2437218 beschrieben. Erfindungsgemäß bevorzugt werden Polyetherpolyole, insbesondere solche auf Basis von Propylenglykol, die mindestens eine Sulfonatgruppe enthalten. Geeignet ist beispielsweise ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃.

Die hierin verwendeten (potentiell) ionischen Polyole haben in verschiedenen Ausführungsformen ein mittleres Molekulargewicht Mₙ im Bereich von 200 bis 1000, vorzugsweise 300 bis 500 g/mol. Besonders bevorzugt ist ein alkoxyliertes, insbesondere propoxyliertes, Addukt von einem Alkendiol, insbesondere 2-Buten-1,4-diol, und einem Sulfit, insbesondere einem Hydrogensulfit, wie NaHSO₃, mit einem Molekulargewicht Mₙ von ungefähr 430.

Die (potentiell) ionischen Polyole, insbesondere anionische Polyetherpolyole, werden in den Polyolmischungen in Mengen von 0,1 bis 5 Gew.-%, insbesondere 0,5-4 Gew.-% jeweils bezogen auf die Polyolmischung eingesetzt. Bei Mengen kleiner als 0,1 Gew.-%, gegebenenfalls auch schon kleiner als 1 Gew.-% kann die Hydrophilizität zu gering sein, um eine stabile Dispersion zu ermöglichen, bei Mengen größer 5 Gew.-% überwiegen die nachteiligen Wirkungen auf die Stabilisierung aufgrund von Phasentrennungen innerhalb der Partikel (Mikrophasentrennung in den Partikeln). Es ist generell vorteilhaft, dass die eingesetzten (potentiell) ionischen Polyole, insbesondere anionischen Polyole, eine ausreichende Löslichkeit in den Polyolen haben, ohne dass zusätzlich Löslichkeitsvermittler eingesetzt werden müssen. Insbesondere die Verwendung von Pyrrolidonen wie NMP (*N*-Methylpyrrolidon) oder NEP (*N*-Ethylpyrrolidon) sowie weiteren aprotischen Lösemitteln, wie z.B. ohne Einschränkung DMSO oder DMF, als Löslichkeitsvermittler sollte - wenn möglich - durch die Wahl eines geeigneten ionischen Polyols ausreichender Löslichkeit vermieden werden. In einer besonders bevorzugten Ausführungsform werden daher propoxylierte oder butoxylierte ionische Polyole genutzt, welche Propylenoxid- bzw. Butylenoxid-Wiederholungseinheiten quasi als interne Löslichkeitsvermittler im Molekül tragen.

Die (potentiell) ionischen Polyole werden vorzugsweise in Mengen eingesetzt, die derart bemessen sind, dass der Gehalt an ionischen Gruppen im Polyurethan-Präpolymer maximal 20 Milliäquivalente, vorzugsweise maximal 10 Milliäquivalente pro 100 g Präpolymer beträgt.

Die in der Polyolmischung eingesetzten nichtionischen Polyetherpolyole sind vorzugsweise solche, die nicht kristallisierend sind, d.h. nicht zur Kristallbildung fähig sind. In verschiedenen Ausführungsformen handelt es sich um Polylalkylenglykole mit Ausnahme von Polyethylenglykol, beispielsweise Polypropylenglykol, Polybutylenglykol, Poly(neo)pentylenglykol, oder Copolymer der genannten miteinander oder auch mit Polyethylenoxid, wobei der Gehalt an Polyethylenoxid in dem entsprechenden Polyol kleiner als 50 Gew.%, vorzugsweise kleiner als 45 Gew.-%, noch bevorzugter kleiner als 10 Gew.-% ist. In verschiedenen Ausführungsformen beträgt der HLB-Wert nach Griffin (HLB = Hydrophilic-Lipophilic-Balance) dieser nichtionische Polyalkylenglykole < 10, bevorzugt < 6 und besonders bevorzugt ≤ 3. Besonders bevorzugt ist ein Polypropylenglykol Homopolymer oder ein Polypropylenglykol/Polyethylenglykol Block-Copolymer, vorzugsweise mit einem Ethylenoxidgehalt von 45 mol% oder weniger, noch bevorzugter 10 % oder weniger.

Die hierin verwendeten nichtionischen Polyetherpolyole haben in verschiedenen Ausführungsformen ein mittleres Molekulargewicht Mₙ im Bereich von 1000 bis 4000, vorzugsweise 1500 bis 2500 g/mol.

Die nichtionischen Polyetherpolyole werden in den Polyolmischungen in Mengen von 0,5 bis 10 Gew.-%, insbesondere 3-5 Gew.-% jeweils bezogen auf die Polyolmischung eingesetzt.

Die Erfinder haben überraschenderweise gefunden, dass die Verwendung der vorstehend genannten nichtionischen Polyetherpolyole anstelle der bisher üblicherweise verwendeten hydrophilen Polyetherpolyole, die überwiegend aus Polyethylenglykol bestehen, zwar größere Partikelgrößen aber auch deutlich engere Partikelgrößenverteilungen liefern. Zusätzlich ist die schlechte Langzeitstabilität Polyethylenlgykol-reicher Polyetherpolyole, die nach einigen Tagen bzw. Wochen zur Koagulation neigen, durch die Verwendung der hierin beschriebenen Polyole deutlich verbessert. Ohne an eine bestimmte Theorie gebunden sein zu wollen wird angenommen, dass in einer herkömmlichen Dispersion die Polyethylenglykol-reichen Segmente an die Grenzfläche der Partikel (also hin zur Wasserphase) wandern, während die kristallisierbaren Polyester-Segmente sich entsprechend im Kern anreichern. Sobald dann eine Kristallisation einsetzt, werden die Dispersionen instabil. Mit weniger Polyethylenglykol bzw. mehr Polypropylenglykol kommt es nicht zu einer solchen Phasenseparation im Partikel, die Polyestersegmente im Inneren der Partikel werden durch Polypropylenglykol-Segmente "verdünnt" und in ihrer Kristallisation zusätzlich gestört, so dass die Partikel stabil dispergiert bleiben.

In verschiedenen Ausführungsformen der hierin beschriebenen Verfahren weist das Polyurethan-Präpolymer ein mittleres Molekulargewicht im Bereich von 3000-15000, insbesondere 5000 bis 10000 g/mol auf. Die gewünschten Molekulargewichte werden durch die Verwendung entsprechender Mengen an Polyolen und Polyisocyanaten eingestellt und mittels geeigneter Messverfahren, wie Endgruppenanalyse (Hydroxylzahl gemäß DIN 53240-1:2013-06 oder Isocyanatgehalt nach Spielberger gemäß EN ISO 11909:2007-05), bestimmt. Entsprechende Kalkulationen und Verfahren sind dem Fachmann ohne weiteres bekannt.

Wie bereits oben beschrieben beträgt der Gehalt an ionischen Gruppen im Polyurethan-Präpolymer vorzugsweise maximal 20 Milliäquivalente, vorzugsweise maximal 10 Milliäquivalente pro 100 g Präpolymer.

Das Präpolymer enthält weniger als 5 Gew.-% Ethylenoxid-Einheiten, d.h. das mittels der hierin beschriebenen Verfahren synthetisierte Polyurethan-Präpolymer enthält bezogen auf sein Gesamtgewicht weniger als 5 Gew.-% EO-Einheiten.

Es ist ferner bevorzugt, das organische Polyisocyanat im molaren Überschuss relativ zu der Polyolmischung einzusetzen, um ein NCO-funktionalisiertes Polyurethan-Präpolymer zu erhalten. Wenn die Polyisocyanate in molarem Überschuss eingesetzt werden, beträgt das OH/NCO Äquivalentverhältnis vorzugsweise 1:1,1 bis 1:4, bevorzugter 1:1,2 bis 1:1,3.

Das organische Polyisocyanat ist eine Verbindung mit mindestens zwei Isocyanat-Gruppen (-NCO), insbesondere ein Diisocyanat. Es kann allerdings unter bestimmten Umständen vorteilhaft sein, kleine Mengen von Isocyanaten mit einer Funktionalität größer 2 einzusetzen ist. In derartigen Fällen werden insbesondere Polyisocyanate auf Basis von Hexamethylendiisocyanat oder polymeres Diphenylmethandiisocyanat verwendet. Geeignete Polyisocyanate schließen ein, sind aber nicht beschränkt auf aromatische Diisocyanate, wie beispielsweise Diphenylmethandiisocyanat (MDI), polymeres MDI (PMDI) und/oder Toluoldiisocyanat (TDI), und aliphatische Diisocyanate, wie beispielsweise Hexamethylendiisocyanat (HDI), Isophorondiisocyanat (IPDI) und/oder Methylen-4,4-bis(cyclohexyl)diisocyanat (H12MDI), oder Mischungen davon. Obwohl sowohl aromatische als auch aliphatische Polyisocyanate verwendet werden können, sind erfindungsgemäß aliphatische Polyisocyanate, insbesondere Diisocyanate, wie IPDI und HDI, bevorzugt.

Zur Bildung des Präpolymers werden die Polyole und die Polyisocyanate vorzugsweise gemischt, wobei die Mischung erhitzt werden kann. Das kann insbesondere dann erforderlich sein, wenn die verwendeten Polyole bei Raumtemperatur fest sind und geschmolzen werden müssen, um die Polyolmischung zu bilden. In bevorzugten Ausführungsformen werden die Polyole kombiniert und unter Rühren und Vakuum auf ungefähr 70 bis 95°C, beispielsweise ungefähr 75°C, erhitzt, um sie zu schmelzen und ggf. zu trocknen. Die Präpolymersynthese erfolgt üblicherweise durch Zugabe der Isocyanate und bei erhöhter Temperatur, insbesondere bei einer Temperatur die größer ist als der Schmelzpunkt Tₘ der Polyesterpolyole, vorzugsweise im Bereich zwischen 70 und 95°C, über einen Zeitraum von ungefähr 1 bis ungefähr 5 Stunden, vorzugsweise ungefähr 2-3 Stunden. Die Reaktion erfolgt typischerweise in Gegenwart eines Katalysators, der zugegeben wird, vorzugsweise eines Bismut-, Zinn-, Zink- oder Titan-basierten Katalysators, noch bevorzugter Bismut(III)-Neodecanoat, Zink(II)-Neodecanoat, Zink(II)-2-Ethylhexanoat, Dibutylzinndilaurat (DBTDL) oder Dimethylzinn-Dineodecanoat, wobei letzteres beispielsweise als Fomrez UL-28 kommerziell erhältlich ist. Alternativ kann die Katalyse auch als metallfreie saure oder basische Katalyse erfolgen.

Die Reaktion wird durchgeführt bis der freie Isocyanat-Gehalt nahe dem kalkulierten Wert ist, wie mittels Standardtitration mit Dibutylamin bestimmt. Bevorzugte Werte für den freien Isocyanatgehalt liegen im Bereich von 0,2 bis 2 Gew.-%, vorzugsweise 0,7 bis 1,8 Gew.-% relativ zu der Gesamtmenge an Polyol und Polyisocyanat in der Mischung. Sobald der gewünschte Wert erreicht ist, wird die Temperatur reduziert, beispielsweise auf 60 °C.

"Ungefähr", wie hierin im Zusammenhang mit Zahlenangaben verwendet, bezieht sich auf ± 10 %, vorzugsweise ± 5 % des Zahlenwerts auf welchen sich die Angabe bezieht. "Ungefähr 70 °C" bedeutet somit 70 ± 7, vorzugsweise 70 ± 3.5 °C.

Wie bereits oben erwähnt wird das Isocyanat vorzugsweise im molaren Überschuss bezogen auf die stöchiometrische Konzentration, die erforderlich ist um alle Hydroxylgruppen vollständig umzusetzen, eingesetzt. Der Überschuss kann ein OH/NCO Äquivalent-Verhältnis von 1:1.1 bis 1:4 sein. Vorzugsweise ist die Menge an eingesetztem Polyisocyanat 20 % bis 150 % größer als die erforderliche stöchiometrische Konzentration um alle Hydroxylgruppen umzusetzen.

Das gebildete Präpolymer kann entweder als solches, vorzugsweise aber in Form einer Lösung in einem geeigneten organischen Lösungsmittel, vorzugsweise eines mit Wasser mischbaren, gegenüber -NCO Gruppen inerten organischen Lösungsmittels, einschließlich aber nicht beschränkt auf Aceton, Ethylacetat und N-Methylpyrrolidon, weiterverwendet werden.

Um die Dispersion des Polyurethan-Präpolymers zu bilden, wird das gebildete Präpolymer bzw. dessen Lösung in eine kontinuierliche wässrige Phase, üblicherweise Wasser oder eine wässrige Lösung, dispergiert bzw. emulgiert.

Zur Bildung der Emulsion/Dispersion können mechanische Rührer oder Rotor-Stator-Mischer, beispielsweise ein Ultra-Turrax-Gerät, sowie Homogenisatoren oder Ultraschallgeräte eingesetzt werden.

Der Dispergier- bzw. Emulgierschritt kann generell bei erhöhter Temperatur, beispielsweise im Bereich von 30-60, beispielsweise ungefähr 40°C erfolgen.

In verschiedenen Ausführungsformen kann erst eine Präemulsion gebildet werden, die dann in einem nachfolgenden Schritt mittels eines geeigneten Verfahren, beispielsweise eines Hochscherverfahrens, homogenisiert wird, um eine Emulsion zu bilden.

"Emulsion", wie hierin verwendet, bezieht sich auf eine Öl-in-Wasser (O/W) Emulsion, in der die emulgierte Phase in Form von Tröpfchen oder Partikeln, vorzugsweise mit annähernd sphärischer Form, in der kontinuierlichen Wasserphase vorliegen. Dabei haben die Tröpfchen/Partikel eine gemittelte Größe, bei annähernd sphärischer Form einen gemittelten Durchmesser, im Größenbereich von 30 bis 1000 nm, insbesondere 50 bis 500 nm, besonders bevorzugt 100 bis 300 nm. Die oben genannten gemittelten Werte beziehen sich dabei auf das z-Mittel ("z-average") aus der dynamischen Lichtstreuung gemäß ISO 22412:2008.

Schritt (ii) des hierin beschriebenen Verfahrens umfasst daher in verschiedenen Ausführungsformen die Schritte:
(a) Emulgieren einer Lösung des Polyurethan-Präpolymers in einem geeigneten Lösungsmittel eine kontinuierliche wässrige Phase, insbesondere Wasser, um eine Präemulsion zu bilden; und
(b) Homogenisieren der Präemulsion und optional Entfernen des Lösungsmittels, vorzugsweise mittels Destillation, um eine stabile Emulsion zu bilden.

Dieser Schritt kann bei Verwendung des Präpolymers als solchem entsprechend abgewandelt werden. Insbesondere wird dann das Präpolymer direkt in die kontinuierliche Phase dispergiert und anschließend homogenisiert.

Zur Bildung der Präemulsion können mechanische Rührer oder Rotor-Stator-Mischer, beispielsweise ein Ultra-Turrax-Gerät, eingesetzt werden, zur Bildung der Emulsion werden vorzugsweise ein Homogenisator, beispielsweise ein Microfluidizer (wie von der Firma Microfluidics erhältlich), oder ein Ultraschallgerät eingesetzt.

Wie bereits beschrieben kann der Dispergierschritt, insbesondere der Homogenisierungsschritt, mittels eines Hochscherverfahrens erfolgen. Geeignete Hochscherverfahren, weisen vorzugsweise Scherraten von mindestens 1.000.000/s und/oder einen Energieeintrag pro Zeit von mindestens 10⁶ J/s*m³ auf. Die Scherrate kann mittels im Stand der Technik bekannter Verfahren berechnet werden bzw. ist für gegebene Geräte bekannt. Allgemein berechnet sich die Scherrate aus dem Verhältnis der maximalen Strömungsgeschwindigkeit (Vₘₐₓ) eines Stoffes, beispielsweise einer Flüssigkeit in einer Kapillare, und dem Radius des durchströmten Hohlkörpers. Der Energieeintrag pro Zeit ergibt sich aus der Energiedichte in J/m³ pro Zeit.

Die wässrige Polyurethan-Dispersion wird dann aus der Emulsion des Präpolymers gebildet. Dazu wird zu der Emulsion ein geeigneter Kettenverlängerer gegeben und mit dem Präpolymer zur Reaktion gebracht. Geeignete Kettenverlängerer sind allgemein Verbindungen, die mindestens zwei Gruppen aufweisen, die gegenüber den Endgruppen des Präpolymers, üblicherweise -NCO Gruppen, reaktiv sind. Beispiele für Kettenverlängerer, die mindestens zwei terminal NCO-reaktive Gruppen enthalten, schließen ein, ohne darauf beschränkt zu sein, Diamine, wie beispielsweise Hydrazin, ein Alkylendiamin oder Cycloalkylendiamin, vorzugsweise Ethylendiamin, Isophorondiamin, Piperazin, oder Polyetheramin, und Diole, wie beispielsweise Butandiol oder 2-Butyl-2-Ethyl-1,3-propandiol. Die Kettenverlängerungsreaktion kann bis zur vollständigen Konversion der Isocyanat-Gruppen durchgeführt werden, d.h. der Kettenverlängerer wird kontinuierlich so lange zugegeben, bis keine freien Isocyanatgruppen mehr nachweisbar sind. Für die Kettenverlängerungsreaktion kann die Gegenwart eines Katalysators bzw. eine erhöhte Temperatur erforderlich sein.

Wie bereits oben erwähnt, betrifft die Erfindung auch die Dispersionen, die mit den hierin beschriebenen Verfahren hergestellt werden bzw. die entsprechende Polyurethan(prä)polymere. Die Dispersionen können in verschiedenen Ausführungsformen Feststoffgehalte im Bereich von 10 bis 60 Gew.-%, vorzugsweise ungefähr 15 bis 50 Gew.-%, noch bevorzugter ungefähr 20 bis 50 Gew.-% aufweisen.

Die Polyurethan-Dispersionen können beispielsweise in Klebstoff- oder Beschichtungszusammensetzungen verwendet werden. Weitere Anwendungsgebiete schließen Dichtmittel, Faserschlichten, Rheologie-Modifikatoren, Lacke, Waschmittel und Kosmetika ein. Dementsprechend richtet sich die Erfindung auch auf entsprechende Zusammensetzungen, die die Dispersionen der Erfindung enthalten. Derartige Zusammensetzungen können weitere Bestandteile, wie sie im Stand der Technik üblich und bekannt sind, enthalten.

Beim Einsatz als Klebstoffe oder Beschichtungsmittel stellen die Grenzphasen von (teil)vernetzten Partikeln mechanische Schwachstellen in den Polymerfilmen dar, welche für viele Anwendungen nachträglich verstärkt werden. Beispielsweise ist bei dispersionsbasierten Klebstoffen und Beschichtungen eine Nachvernetzung der getrockneten Polymerfilme üblich. Für die interpartikuläre Vernetzung von Filmen aus Polyurethan-Dispersionen sind im Stand der Technik verschiedene Systeme beschrieben, die der Fachmann auf Basis seines Fachwissens auswählen und anwenden kann.

Klebstoffzusammensetzungen, die die Polyurethan-Dispersionen der Erfindung enthalten, können daher in verschiedenen Ausführungsformen der Erfindung beispielsweise mindestens einen externen Vernetzer enthalten. Der Begriff "externer Vernetzer", wie hierin verwendet, bezeichnet eine Verbindung, welche vor der Vernetzungsreaktion nicht an das Polyurethan gebunden ist sondern in der Polyurethan-Dispersion gelöst oder dispergiert ist. Geeignete externe Vernetzungsmittel sind z. B. Polyisocyanate mit mindestens zwei Isocyanatgruppen, z. B. aus Diisocyanaten gebildete Isocyanurate, Verbindungen mit mindestens einer Carbodiimidgruppe (insbesondere wenn das Polyurethan Carboxylgruppen enthält), chemisch blockierte Isocyanate oder verkapselte Isocyanate (besonders bei 1K-Systemen), verkapselte Uretdione, Biurete oder Allophanate. Geeignet sind auch Aziridine, Oxazoline und Epoxide. Beispielsweise können aliphatische Polyisocyanate, insbesondere wasseremulgierbare Polyisocyanate, z. B. Basonat® LR9056 eingesetzt werden. Die vorstehend beschriebenen Nachvernetzer-Systeme sind im Detail in den Patentveröffentlichungen WO 2000/037526 A1, EP 1 600 485 A1, EP 0 436 941 A1, US 4,190,567 A, DE 35 238 56 A1 und US 5,133,997 A sowie den Publikationen Meier-Westhues, U. (Polyurethanes: Coatings, Adhesives and Sealants. 2. Auflage; Vincentz 2007), Wicks&Wicks (Blocked isocyanates III: Part A. Mechanisms and chemistry. Prog. Org. Coat. 1999, 36 (3), 148-172) und Müller & Poth (Lackformulierung und Lackrezeptur. 3. Auflage; Vincentz 2009) beschrieben.

Der externe Vernetzer wird vorzugsweise in einer Menge von 0,5 bis 10 Gew.-%, bezogen auf Feststoffgehalt der Dispersion, eingesetzt.

In verschiedenen Ausführungsformen kann das Polyurethan bereits Uretdion-Einheiten in sich tragen, die bei der Herstellung der Präpolymere eingeführt wurden. Diese können dann bei der Vernetzung mit Aminen (bevorzugt grenzflächendeaktivierten, festen (schmelzbaren) Polyaminen in Pulverform) reagieren. Derartige Systeme sind beispielsweise in der internationalen Patentveröffentlichung WO 2012/130711 beschrieben.

In anderen Ausführungsformen können die Klebstoffzusammensetzungen aber auch Vernetzer enthalten, die an das Polyurethan gebunden sind (interne Vernetzer).

Mit der chemischen Nachvernetzung können die mechanischen Festigkeiten der hergestellten Polymerfilme drastisch gesteigert werden.

Die hierin beschriebenen Polyurethan-Dispersionen können beispielsweise in wässrigen Klebstoffzubereitungen für die Herstellung von Laminaten, d.h. in wässrigen Kaschierklebstoffzubereitungen zum Verkleben von großflächigen Substraten, insbesondere für die Herstellung von Verbundfolien verwendet. Bei solchen Verfahren zur Herstellung von Verbundfolien werden mindestens zwei Substrate unter Verwendung der wässrigen Polymer-Dispersion miteinander verklebt. Die Substrate sind typischerweise großflächige, flexible Komponenten, von denen mindestens eine, vorzugsweise zwei Polymerfolien sind.

Die vorliegende Erfindung betrifft somit auch ein Verfahren zur Herstellung von Verbundfolien, bei dem eine oben beschriebene wässrige Polyurethan-Dispersion eingesetzt wird. Hierbei können die wässrigen Polymer-Dispersionen als solche oder nach Konfektionierung mit üblichen Hilfsstoffen als wässrige Klebstoffzubereitungen eingesetzt werden. Übliche Hilfsstoffe sind beispielsweise Netzmittel, Verdicker, Schutzkolloide, Lichtschutzstabilisatoren, Biozide, Entschäumer usw. In solchen Verfahren wird die optional konfektionierte Polyurethan-Dispersion beispielsweise auf eine Kunststoff- oder Metallfolie aufgetragen und mit einer oder mehreren weiteren Kunststoff- und/oder Metallfolien zu einer Verbundfolie verklebt.

Die erfindungsgemäßen Klebstoffzubereitungen benötigen in verschiedenen Ausführungsformen keine Zusätze von weichmachenden Harzen (Tackifiern) oder anderen Weichmachern.

Bei den beschriebenen Verfahren zur Herstellung von Verbundfolien wird, in verschiedenen Ausführungsformen, die erfindungsgemäße Polymer-Dispersion oder eine entsprechend konfektionierte Zubereitung auf die zu verklebenden Substrate vorzugsweise mit einer Schichtdicke von 0,1 bis 20 g/m(2), besonders bevorzugt 1 bis 7 g/m(2) z. B. durch Rakeln, Streichen etc. aufgetragen. Es können übliche Beschichtungsverfahren angewendet werden, z. B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z. B. 20 bis 200 °C, vorzugsweise 20 bis 100 °C und der Druck z. B. 100 bis 3000 kN/m², vorzugsweise 300 bis 2000 kN/m² betragen kann.

Alle zitierten Dokumente sind hierin durch Bezugnahme in ihrer Gesamtheit eingeschlossen.

Die folgenden Beispiele dienen der Erläuterung der Erfindung, die Erfindung ist aber nicht darauf beschränkt.

### Beispiele

### Beispiel 1

### Polyurethansynthese:

Vor der Reaktion wurden die eingesetzten Polyole mit Ausnahme von 1,4-Butandiol bei 70-80°C im Vakuum (<1mbar) entwässert. Alle Reaktionen erfolgten unter Stickstoffatmosphäre. Die Synthesen wurden in einem Vierhalsrundkolben mit Thermometer, Schliffolive zur Stickstoffeinleitung, KPG-Rührer sowie Rückflusskühler mit aufgesetztem Trockenrohr durchgeführt. Die Synthese erfolgte bei 70 °C.

Es wurden die folgenden Edukt-Mischungen verwendet:

| | PUA | PU B | PU C | PU D | PU E |
|---|---|---|---|---|---|
| Adipinsäure-Butylenglykol Polyester (Mₙ 3200) | 79,80 g | 79,80 g | 79,80 g | 375,55 g | 278,70 g |
| Adipinsäure-Butylenglykol Polyester (Mₙ 2015) | 10,20 g | 10,20 g | 10,20 g | 50,70 g | 37,70 g |
| Sulfoniertes Diol (Mₙ 430) | 5,00 g | 5,00 g | 5,00 g | - | - |
| EO/PO Copolymer (Konion DR-802 von GreenSoftChem, Mₙ 2000, EO/PO = ca. 8/2) | 10,00 g | 5,00 g | - | - | - |
| EO-PO-EO Block Copolymer (Tergitol L61 PU von Dow, Mₙ 2000, EO/PO = ca. 1/9) | - | 5,00 g | 10,00 g | - | 103,9 g |
| EO/PO Copolymer (Synalox 40-D300 von Dow, Mₙ 3500, EO/PO = 6/4) | - | - | - | 15,00 g | - |
| 1,4-Butandiol | - | - | - | 1,01 g | 0,738 g |
| Isophorondiisocyanat | 15,19 g | 15,19 g | 15,19 g | 55,06 g | 48,59 g |
| Formrez UL-28 Lösung in Aceton (50 Gew.-%) | 12 mg | 12 mg | 12 mg | 50 mg | 50 mg |

Die so synthetisierten Präpolymere wurden zum Zweck der weiteren Untersuchungen nach Erreichen des theoretischen NCO-Wertes mit 5,62 g Dibutylamin gecappt.

### Herstellung der Emulsionen:

Die Emulsionen wurden hergestellt, indem zunächst disperse und kontinuierliche Phase getrennt angesetzt und durchmischt wurden. Anschließend wurden diese miteinander gemischt und zunächst mit einem Ultra-Turrax-Stab vorbehandelt (1-3 min bei 11k U/min) um eine Prä-Emulsion zu erzeugen. Anschließend erfolgte die Miniemulgierung mit einem Hochdruckhomogenisator von Microfluidics (3 Durchläufe). Für die Herstellung der Emulsionen wurden 11,5 g der Präpolymere PU A, PU B und PU C jeweils in 11,5 Ethylacetat gelöst und in 75 g Wasser miniemulgiert.

### DLS-Messungen:

DLS-Messungen der hergestellten Emulsionen direkt nach der Homogenisierung ergaben folgende Werte:

| Probe | z-average (DLS)/nm | normierte Standardabweichung (DLS)/% |
|---|---|---|
| PUA | 141 | 25 |
| PU B | 189 | 20 |
| PUC | 235 | 10 |

### Beispiel 2

### Polyurethansynthese:

Die Synthese wurde in einem angemessenen 4-Halskolben mit Rückflusskühler, KPG-Rührwelle, N₂-Einlass und Kontaktinnenthermometer durchgeführt. Die Polyole wurden aufgeschmolzen und bei 75°C und 1 mBar entwässert. Danach wurde unter N₂-Schutzatmosphäre weiter gearbeitet. Zu diesem Gemisch wurde bei 70 °C erst Isophorondiisocyanat und anschließend Hexamethylendiisocyanat gegeben. Nach Zugabe von Formrez UL 28 (50 Gew. % in Aceton) wurde die entstehende Exothermie durch Kühlung mit einem Eisbad soweit abgefangen, dass das Gemisch nicht wärmer als 85°C wurde. Als die Exothermie nachließ wurde die Temperatur für eine weitere Stunde bei 85°C gehalten. Anschließend wurde der Anteil an Isocyanatgruppen nach Spielberger titriert. Bei Erreichen des gewünschten Isocyanatgehalts wurde das Präpolymer auf ca. 50°C abgekühlt und in 150g über Molsieb (3Å) getrocknetem Aceton gelöst.

### Herstellungsmethoden der Emulsionen:

Ohne Homogenisator: Zum in Aceton gelösten Präpolymer wurden innerhalb von 5 Minuten 150 g VE-Wasser gegeben. Dabei entstand eine weiße Emulsion. Von dieser Emulsion wurde der Feststoffgehalt gemessen. Zur Emulsion wurde eine wässrige Lösung von Isophorondiamin (70 mol% Amin relativ zu NCO) unter Rühren (250 U/Min) zugetropft. Anschließend wurde erneut der Feststoffgehalt bestimmt. Von der Emulsion wurde nun das Aceton in einem Rotationsverdampfer abdestilliert. Danach wurden DLS und Feststoffgehalt gemessen.

Herstellung der Emulsion mit dem Homogenisator: Das in Aceton gelöste Präpolymer wurde innerhalb von 5 Minuten bei 40 °C mit Ultra-Turrax T25 basic bei 11000 U/min in Wasser präemulgiert. Diese Präemulsion wurde dann am Homogenisator (Microfluidizer M-100Y der Firma Microfluidics) bei 40 °C in 4 Durchläufen (1.Kammer: H210Z 200µm; 2.Kammer: H230Z 400µm. 700 Bar) behandelt. Von dieser Emulsion wurde der Feststoffgehalt gemessen. Zur Emulsion wurde eine wässrige Lösung von Isophorondiamin (70 mol% Amin relativ zu NCO) unter Rühren (250 U/Min) zugetropft. Anschließend wurde erneut der Feststoffgehalt bestimmt. Von der Emulsion wurde nun das Aceton in einem Rotationsverdampfer abdestilliert. Danach wurden DLS und Feststoffgehalt gemessen.

### Polyurethane:

| Vorgabe | PU 1 | PU 2 | PU 3 | PU 4 |
|---|---|---|---|---|
| Mₙ Präpolymer (g/mol) | 5000 | 7000 | 9000 | 12000 |
| | | | | |
| Menge/g | PU 1 | PU 2 | PU 3 | PU 4 |
| K320 (Hosung Chemex Co., Ltd) | 117,74 | 117,85 | 118,72 | 158,28 |
| DR-802 (KPX Green Chemical) | 3,00 | 4,50 | 4,50 | 6,00 |
| Tergitol L-61 PU Surfactant (Dow Europe Gmbh) | 6,00 | 6,00 | 6,00 | 8,00 |
| GS-7Q (Yedang G&B Co., Ltd) | 3,00 | 3,00 | 3,00 | 4,00 |
| Isophorondiisocyanat (Merck) | 15,30 | 14,09 | 13,42 | 21,88 |
| 1,6-Hexamethylendiisocyanat | 4,96 | 4,57 | 4,35 | 1,84 |
| Formrez UL 28 (Momentive Amer Ind.) | 0,035 | 0,035 | 0,035 | 0,040 |
| Gesamtmasse (g) | 150,04 | 150,05 | 149,99 | 200,04 |

Nach 1 Stunde bei 85°C wurde ein NCO-Gehalt von 1,80 Gew.-% (PU 1), 1,33 Gew.-% (PU 2), 1,06 Gew.-% (PU 3) und 0,77 Gew.-% (PU 4) ermittelt.

### Emulgierung ohne Hochscherverfahren:

150,0 g der Präpolymer PU 1/Acetonmischung wurden mit 150,0 g VE-Wasser emulgiert.
Nach Emulgierung wurde ein Feststoffgehalt von 25,2 % ermittelt.
50,0 g der Präpolymer PU 2/Acetonmischung wurden mit 50,0 g VE-Wasser emulgiert.
Nach Emulgierung wurde ein Feststoffgehalt von 25,6 % ermittelt.
150,0 g der Präpolymer PU 3/Acetonmischung wurden mit 150,0 g VE-Wasser emulgiert.
Nach Emulgierung wurde ein Feststoffgehalt von 21,5 % ermittelt.
Eine Emulgierung des Präpolymers PU 4 war nicht möglich. Bei der Zugabe von Wasser entstand keine stabile Emulsion. Das Produkt war cremeartig und eine Verdünnung mit Wasser war nicht möglich.

### Kettenverlängerung:

Die Kettenverlängerung von PU 1 wurde mit 3,8 g Isophorondiamin in 10 g VE-Wasser durchgeführt. Danach wurde ein Feststoffgehalt von 27,2 % ermittelt.

Die Kettenverlängerung von PU 2 wurde mit 0,9 g Isophorondiamin in 5 g VE-Wasser durchgeführt. Danach wurde ein Feststoffgehalt von 25,5 % ermittelt.

Die Kettenverlängerung von PU 3 wurde mit 2,3 g Isophorondiamin in 10 g VE-Wasser durchgeführt. Danach wurde ein Feststoffgehalt von 20,8 % ermittelt.

Nach dem Einrotieren der Emulsion ergaben sich folgende Messwerte:

| Verwendetes PU | PU 1 | PU 2 | PU 3 |
|---|---|---|---|
| Feststoffgehalt: | 32,3 % | 35,7 % | 39,6 % |

| **Teilchengröße** | | | |
|---|---|---|---|
| Mittlerer Durchmesser z-average | 325 nm | 540 nm | 296 nm |
| norm. Standardabweichung | 0,22 | 0,57 | 0,19 |

### Herstellung der Emulsion mit dem Homogenisator:

81,3 g der Präpolymer PU 1/Acetonmischung wurden mit 60,0 g VE-Wasser Emulgiert.
Nach Emulgierung wurde ein Feststoffgehalt von 27,9 % ermittelt.
80,9 g der Präpolymer PU 2/Acetonmischung wurden mit 60,0 g VE-Wasser emulgiert.
Nach Emulgierung wurde ein Feststoffgehalt von 25,1 % ermittelt.
81,0 g der Präpolymer PU 3/Acetonmischung wurden mit 60,0 g VE-Wasser emulgiert.
Nach Emulgierung wurde ein Feststoffgehalt von 24,6 % ermittelt.
80,21 g der Präpolymer PU 4/Acetonmischung wurden mit 60,00 g VE-Wasser emulgiert.
Nach Emulgierung wurde ein Feststoffgehalt von 27,6 % ermittelt.

### Kettenverlängerung:

Die Kettenverlängerung von PU 1 wurde mit 2,1 g Isophorondiamin in 10 g VE-Wasser durchgeführt. Danach ergab sich ein Feststoffgehalt von 26,0 %
Die Kettenverlängerung von PU 2 wurde mit 1,7 g Isophorondiamin in 10 g VE-Wasser durchgeführt. Danach ergab sich ein Feststoffgehalt von 23,5 %.
Die Kettenverlängerung von PU 3 wurde mit 1,2 g Isophorondiamin in 10 g VE-Wasser durchgeführt. Danach ergab sich ein Feststoffgehalt von 23,6 %.
Die Kettenverlängerung von PU 4 wurde mit 0,9 g Isophorondiamin in 10 g VE-Wasser durchgeführt. Danach ergab sich ein Feststoffgehalt von 26,6 %.

Nach dem Einrotieren der Emulsion ergaben sich folgende Messwerte:

| Verwendetes PU | PU 1 | PU 2 | PU 3 | PU 4 |
|---|---|---|---|---|
| Feststoffgehalt: | 35,5 % | 38,6 % | 32,2 % | 36,4 % |

| **Teilchengröße** | | | | |
|---|---|---|---|---|
| Mittlerer Durchmesser z-average | 250 nm | 211 nm | 198 nm | 490,1 nm |
| norm. Standardabweichung | 0,22 | 0,16 | 0,23 | 0,23 |

### Beispiel 3

Die Polyurethan-Präpolymere wurden analog zum vorigen Beispiel hergestellt. Die Synthesetemperatur betrug ca. 80 °C.

| | PU A | PU B | PU C | PU D |
|---|---|---|---|---|
| Realkyd XTR 30110 (Arkema) / g | 373,89 | 374,12 | 374,34 | 374,12 |
| K-HN-8200 (Polyether, Mn ca 2000 g/mol, 80% EO, Hannong Chemicals) / g | 40,00 | 20,00 | - | - |
| Tergitol L-61 (Polyether, Mn ca 2000 g/mol, 10% EO, Dow Chemical) / g | - | 20,00 | 40,00 | - |
| Voranol 2000L (Dow Chemical) / g | - | - | - | 40,00 |
| GS-7Q (Yedang G&B Co., Ltd) / g | 20,00 | 20,00 | 20,00 | 20,00 |
| Isophorondiisocyanat (Merck) / g | 66,11 | 65,90 | 65,66 | 65,88 |
| Fomrez UL 28 (50 Gew.% in Aceton) / g | 0,10 | 0,10 | 0,10 | 0,10 |
| Dibutylamin / g | 17,90 | 18,18 | 15,00 | 17,80 |

Anschließend wurden die Präpolymere 1:1 in Ethylacetat gelöst und mit Dibutylamin endgecappt. Die Polyurethanlösungen wurden wie im vorigen Beispiel mit einem Homogenisator in Wasser emulgiert. Ihre kolloidalen Eigenschaften waren wie folgt (der EO Gehalt bezieht sich auf die nichtionischen Polyetherpolyole).

| Probe | PU | EO Gehalt / % | z-average / nm | normierte Standardabweichung |
|---|---|---|---|---|
| ME A | PUA | 80 | 135 | 0,26 |
| ME B | PU B | 45 | 173 | 0,22 |
| ME C | PU C | 10 | 222 | 0,17 |
| ME D | PU D | 0 | 275 | 0,06 |

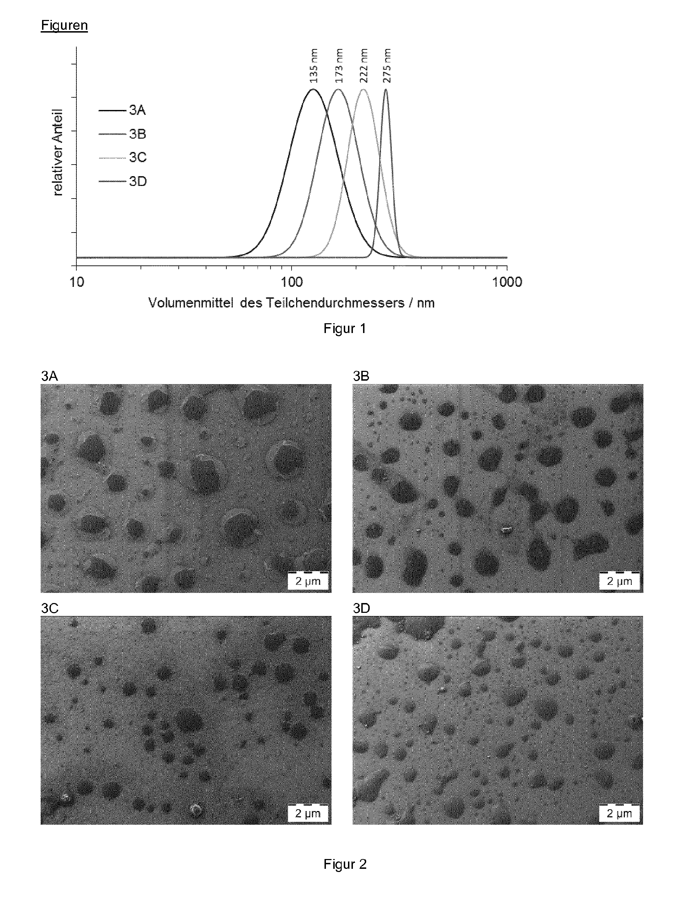

Die Partikelgrößenverteilung der Emulsionen ist in Figur 1 dargestellt.

Stark verdünnte Emulsionen wurden auf Siliziumwafern getrocknet und mittels SEM untersucht. Die erhaltenen Bilder sind in Figur 2 gezeigt, wobei sich in den Proben A und B eine Phasenseparation in den Partikeln zeigt.

Die Dispersionen C und D erwiesen sich für über 6 Monate als stabil; die Emulsionen 3A und 3B bildeten über 2 Monate einen Niederschlag. Um die kolloidale Stabilität näher zu untersuchen, wurden die Emulsionen reproduziert und der Feststoffgehalt mittels Destillation von Wasser auf 40 Gew.-% erhöht. In Emulsion A bildete sich bei erhöhtem Feststoffgehalt ein mit Wasser gequollenes Koagulat, welches sich als teilkristallin erwies (DSC).

### Beispiel 4

Die Präpolymersynthese wurde analog zu den vorigen Beispielen durchgeführt.

Die Zugabe des Katalysators erfolgte hier in zwei Schritten. 50 µL der Lösung wurden zum Start der Reaktion zugegeben, weitere 40 µL nach Abklingen der Exothermie. Die Synthese wurde bei ca. 70 °C durchgeführt. Vor der Emulgierung wurde das Präpolymer in Aceton gelöst.

| | |
|---|---|
| Realkyd XTR 30110 (Arkema) / g | 750,15 |
| K-HN-8200 (Polyether, Mn ca 2000 g/mol, 80% EO, Hannong Chemicals) / g | 40,00 |
| Tergitol L-61 (Polyether, Mn ca 2000 g/mol, 10% EO, Dow Chemical) / g | 40,00 |
| GS-7Q (Yedang G&B Co., Ltd) / g | 40,00 |
| Isophorondiisocyanat (Merck) / g | 129,85 |
| Fomrez UL 28 (50 Gew.% in Aceton) / µL | 90 |

Die Dispergierung erfolgte analog zum vorigen Ansatz mit Ultraturrax-Mischer und Homogenisator. Die Präpolymer-Dispersion wurde aufgeteilt und mit 0-120 mol% der Diamine Ethylendiamin (EDA), Isophorondiamin (IPDA) und Piperazin (jeweils als wässrige Lösung) versetzt. Die angegebene Menge an Diamin ist hierbei relativ zu den Polyurethan-Präpolymeren angegeben. Alle Dispersionen blieben kolloidal stabil, es wurden keine Veränderungen der Teilchengrößen (DLS) sowie kein Koagulat beobachtet:

| Probe | *z-average* / nm | PDI |
|---|---|---|
| vor Kettenverlängerung | 164 | 0,02 |
| 120 mol% Piperazin | 178 | 0,12 |
| 120 mol% EDA | 176 | 0,04 |
| 120 mol% IPDA | 169 | 0,02 |

Mittels Gelpermeationschromatographie wurden die apparenten Molekulargewichte (gegen Polystyrol-Standards) der getrockneten Polymere ermittelt. In der folgenden Tabelle sind die Molekulargewichte für verschiedene Mengen der Kettenverlängerer dargestellt. Als Referenz wurde ein Teil der Präpolymer-Dispersion mit einem leichten Überschuss an Dibutylamin umgesetzt, hierbei wurde ein M_{w} von 22800 g/mol gemessen.

| Menge Kettenverlängerer | M_{w} mit EDA / kg/mol | M_{w} mit Piperazin / kg/mol | M_{w} mit IPDA / kg/mol |
|---|---|---|---|
| 0 mol% | 115 | 115 | 115 |
| 10 mol% | 96 | 118 | 104 |
| 20 mol% | 110 | 115 | 109 |
| 30 mol% | 120 | 115 | 117 |
| 40 mol% | 114 | 117 | 123 |
| 50 mol% | 120 | 121 | 124 |
| 55 mol% | 127 | 124 | 131 |
| 60 mol% | 123 | 119 | 133 |
| 65 mol% | 129 | 120 | 134 |
| 70 mol% | 136 | 124 | 145 |
| 75 mol% | 144 | 125 | 148 |
| 80 mol% | 136 | 124 | 140 |
| 85 mol% | 131 | 122 | 117 |
| 90 mol% | 137 | 129 | 103 |
| 95 mol% | 142 | 131 | 92 |
| 100 mol% | 142 | 123 | 81 |
| 120 mol% | 134 | 134 | 58 |

## Patentansprüche

1. Verfahren zur Herstellung einer wässrigen Polyurethan-Präpolymer-Dispersion, **dadurch gekennzeichnet, dass** das Verfahren umfasst:
(i) Umsetzen einer Mischung, die eine Polyolmischung und mindestens ein organisches Polyisocyanat umfasst, um ein Polyurethan-Präpolymer herzustellen, wobei die Polyolmischung umfasst:
(a) 40-95 Gew.-%, vorzugsweise 50-90 Gew.-%, noch bevorzugter 60-80 Gew.-% mindestens eines Polyesterpolyols, das einen Schmelzpunkt Tₘ von größer 0°C besitzt;
(b) 0,1-5 Gew.-%, insbesondere 0,5-4 Gew.-%, mindestens eines Polyols, vorzugsweise eines Polyetherpoyols, das mindestens eine ionische oder potentiell ionische hydrophile Gruppe aufweist; und
(c) 0,5-10 Gew.-%, insbesondere 3-5 Gew.-%, mindestens eines nichtionischen Polyetherpolyols, wobei das Polyetherpolyol ein Polyalkylenglykol Homo- oder Copolymer ist, das einen Gehalt von Ethylenoxid Einheiten von unter 50 mol-% aufweist;
wobei das Polyurethan-Präpolymer weniger als 5 Gew.-% Ethylenoxid-Einheiten enthält; und
(ii) Dispergieren des Polyurethan-Präpolymers in eine kontinuierliche wässrige Phase derart, dass eine stabile Emulsion des Polyurethan-Präpolymers gebildet wird.

2. Das Verfahren nach Anspruch 1, **dadurch gekennzeichnet, dass** Schritt (ii) umfasst:
(a) Emulgieren einer Lösung des Polyurethan-Präpolymers in einem geeigneten Lösungsmittel in eine kontinuierliche wässrige Phase, insbesondere Wasser, um eine Präemulsion zu bilden; und
(b) Homogenisieren der Präemulsion und optional Entfernen des Lösungsmittels um eine stabile Emulsion zu bilden.

3. Das Verfahren nach Anspruch 1 oder 2, **dadurch gekennzeichnet, dass** das Polyesterpolyol
(i) ein zur Kristallisation neigendes Polyesterpolyol ist; und/oder
(ii) einen Schmelzpunkt Tₘ größer als 40°C aufweist; und/oder
(iii) ein Polyesterdiol ist; und/oder
(iv) aus Diolen, insbesondere ausgewählt aus der Gruppe bestehend aus Ethandiol, 1,2-Propandiol, 1,3-Propandiol, 1,4-Butandiol, 1,6-Hexandiol, und Mischungen davon, und Disäuren, insbesondere Dicarbonsäuren, vorzugsweise ausgewählt aus der Gruppe bestehend aus Oxalsäure, Malonsäure, Bernsteinsäure, Glutarsäure, Adipinsäure, Pimelinsäure, Suberinsäure und Mischungen davon, durch Kondensation erhältlich ist, insbesondere Poly(tetramethylen adipat) (PTMA) ist; und/oder
(v) aus zyklischen Estern, insbesondere ε-Caprolacton, durch ringöffnende Polymerisation herstellbar ist; und/oder
(vi) ein mittleres Molekulargewicht von 1000 bis 5000, vorzugsweise 2000-3500 g/mol aufweist.

4. Das Verfahren nach einem der Ansprüche 1-3, **dadurch gekennzeichnet, dass** das Polyol, das mindestens eine ionische oder potentiell ionische hydrophile Gruppe aufweist
(i) ein Polyol, insbesondere ein Polyetherpolyol, ist, das mindestens eine, vorzugsweise genau eine, anionische oder potentiell anionische hydrophile Gruppe aufweist; und/oder
(ii) eine ionische Gruppe aufweist, die ausgewählt wird aus der Gruppe bestehend aus Sulfat-, Sulfonat-, Phosphat-, Phosphonat-, Carboxylat-, und Ammonium-Gruppen, sowie ionischen Heterozyklen, insbesondere stickstoffhaltigen, 5-6-gliedrigen Heterozyklen; und/oder
(iii) eine potentiell ionische Gruppe aufweist, die ausgewählt wird aus der Gruppe bestehend aus Carbonsäure- und Amino-Gruppen sowie ungeladenen Heterozyklen, insbesondere stickstoffhaltigen, 5-6-gliedrigen Heterozyklen; und/oder
(iv) ein alkoxyliertes, insbesondere propoxyliertes, Addukt von einem Alkendiol, insbesondere 2-Buten-1,4-diol, und einem Sulfit, insbesondere einem Hydrogensulfit, ist; und/oder
(v) ein mittleres Molekulargewicht im Bereich von 200 bis 1000, vorzugsweise 300 bis 500 g/mol aufweist.

5. Das Verfahren nach einem der Ansprüche 1-4, **dadurch gekennzeichnet, dass** das nichtionische Polyetherpolyol
(i) ein Polypropylenglykol Homo- oder Copolymer ist, insbesondere ein Polypropylenglykol Homopolymer oder ein Polypropylenglykol/Polyethylenglykol Block-Copolymer, vorzugsweise mit einem Ethylenoxidgehalt von 45 mol% oder weniger, noch bevorzugter 10 mol% oder weniger; und/oder
(ii) ein mittleres Molekulargewicht im Bereich von 1000 bis 4000, vorzugsweise 1500 bis 2500 aufweist; und/oder
(iii) einen HLB-Wert <10, vorzugsweise <6, besonders bevorzugt ≤3 aufweist.

6. Das Verfahren nach einem der vorangehenden Ansprüche, **dadurch gekennzeichnet, dass** das Polyurethan-Präpolymer ein mittleres Molekulargewicht im Bereich von 3000-15000, insbesondere 5000 bis 10000 g/mol aufweist.

7. Das Verfahren nach einem der vorangehenden Ansprüche, **dadurch gekennzeichnet, dass** der Gehalt an ionischen Gruppen im Polyurethan-Präpolymer maximal 20 Milliäquivalente, vorzugsweise maximal 10 Milliäquivalente pro 100 g Präpolymer beträgt.

8. Das Verfahren nach einem der vorangehenden Ansprüche, **dadurch gekennzeichnet, dass** das organische Polyisocyanat im molaren Überschuss relativ zu der Polyolmischung eingesetzt wird, um ein NCO-funktionalisiertes Polyurethan-Präpolymer zu erhalten.

9. Das Verfahren nach einem der vorangehenden Ansprüche, **dadurch gekennzeichnet, dass** das organische Polyisocyanat ein Diisocyanat ist, insbesondere ausgewählt aus der Gruppe bestehend aus aromatischen Diisocyanaten, vorzugsweise Diphenylmethandiisocyanat (MDI), polymerem MDI und/oder Toluoldiisocyanat (TDI), und aliphatischen Diisocyanaten, vorzugsweise Hexamethylendiisocyanat (HDI), Isophorondiisocyanat (IPDI) und/oder Methylen-4,4-bis(cyclohexyl)diisocyanat (H12MDI), oder Mischungen davon.

10. Wässrige Polyurethan-Präpolymer-Dispersion erhältlich nach dem Verfahren nach einem der Ansprüche 1-9.

11. Verfahren zur Herstellung einer wässrigen Polyurethan-Dispersion (PUD), **dadurch gekennzeichnet, dass** das Polyurethan-Präpolymer in der wässrigen Polyurethan-Präpolymer-Dispersion nach Anspruch 10 mit einem Kettenverlängerer umgesetzt wird, um eine wässrige Polyurethan-Dispersion zu bilden.

12. Das Verfahren nach Anspruch 11, wobei das Polyurethan-Präpolymer ein NCO-funktionalisiertes Präpolymer ist und das Präpolymer mit einem Kettenverlängerungsmittel, das mindestens zwei endständige NCO-reaktive Gruppen umfasst, insbesondere einem Diamin oder einem Diol, umgesetzt wird.

13. Wässrige Polyurethan-Dispersion erhältlich nach dem Verfahren gemäß Anspruch 11 oder 12.

14. Klebstoff-, Dichtstoff- oder Beschichtungsmittelzusammensetzung enthaltend die Polyurethan-Dispersion nach Anspruch 13.

15. Verwendung einer Polyurethan-Dispersion nach Anspruch 13 als Klebstoff, Beschichtungsmittel, Dichtmittel, Faserschlichte oder Rheologie-Modifikator.
